# EUROPEAN PATENT APPLICATION

(11) **EP 0 553 917 A2**
(43) Date of publication of application: **04.08.1993**
(21) Application number: 93200148.0
(22) Date of filing: 21.01.1993
(51) Int. Cl.: C08G 18/10, C08J 9/02, C08G 18/48

(54) **Flexible polyurethane foams and the procedure for their preparation**

(30) Priority: 27.01.1992 IT MI920135
(71) Applicant: ENICHEM S.p.A., I-20124 Milano (IT)
(72) Inventor: Lunardon, Gianflavio, I-35133 Padova (IT); Stefani, Dario, I-35135 Padova (IT)
(74) Representative: Fusina, Gerolamo

(57) **Abstract**

Flexible polyurethane foams having a density lower than 21 Kg/m³ obtained, without expanding agents of the chlorofluoroalkanic type, by the polycondensation of an isocyanic prepolymer with a polyolic composition including a polyol, with an equivalent weight higher than 500, water and an additive for processability composed of a cross-linking/chain-lengthening agent having a low molecular weight and, optionally, a cell-opening agent.

## Description

The present invention relates to flexible polyurethane foams and the procedure for their preparation.

More specifically the present invention relates to flexible polyurethane foams, obtained with a procedure which does not involve the use of secondary expanding agents of the chlorofluoroalkanic type, and the procedure for their preparation.

The method for producing polyurethane foams has been known for a long time: it consists in reacting polyols-polyethers or polyesters with polyisocyanates in the presence of catalysts, expanding agents, cell-regulating surface-active agents, stabilizers and other auxiliary products.

The published European Patent Application No. 398.304 describes the preparation of flexible polyurethane foams with a procedure which does not require the use of expanding agents of the chlorofluoroalkanic type.

More specifically the above Application describes flexible polyurethane foams having densities of between 15 and 60 kg/m³ and a load bearing capacity, at 40% compression according to the regulation ISO 2439, of between 50 and 150 N using only carbon dioxide as an expanding agent.

According to this Application the foams having the above characteristics can be obtained by reacting an isocyanic prepolymer, of the aromatic or cycloaliphatic kind and having a content of free NCO groups of between 10 and 45% by weight, with a polyol polyether obtained by the condensation of propylene and ethylene oxide wherein the content of ethylene oxide is between 10 and 90% by weight.

Italian Patent Application No. 22.091/A90 describes the possibility of increasing the load bearing capacity of the above flexible polyurethane foams to values higher than 150 N, without secondary expanding agents of the chlorofluoroalkanic type, using as polyurethane reagent, a polyol polyether having an ethylene oxide content which is less than 50% by weight and a well defined molecular weight.

More specifically, according to the above Application flexible polyurethane foams can be obtained with a load bearing capacity which is higher than 150 N, without an expanding agent of the chlorofluoroalkanic type, by the reaction between a modified polyisocyanate and a compound containing chain-end active hydrogens wherein:
- the modified polyisocyanate has a content of free NCO groups of between 10 and 45% by weight and is obtained by the partial polymerization of an organic polyisocyanate, having an isocyanic functionality of at least 2, with at least one polyol polyether having a molecular weight ranging from 500 to 8000 having a hydroxylic functionality of between 2 and 4;
- the compound containing chain-end active hydrogens includes water and at least one polyol polyether obtained by the condensation of propylene and ethylene oxide, with an ethylene oxide content of less than 50% by weight, and having:
   a) a hydroxylic functionality of between 2 and 4;
   b) an equivalent weight of between 500 and 2500 per chain-end hydroxylic group;
with the clause that when the polyol polyether of the compound containing chain-end active hydrogens has an ethylene oxide content of between 0 and 10% by weight, its equivalent weight is between 500 and 2500 whereas when its ethylene oxide content is between 10 and 50%, its equivalent weight is between 1000 and 1500.

In the practical application of these inventions and especially for the production of expanded foams with a density lower than 21 kg/m³, there are difficulties in using carbon dioxide alone, produced by the isocyanate/H₂O reaction, owing to scorching of the foams caused by the high exothermic effect of the chemical reactions in the production phase.

US Patent 4.950.694 describes a process for the production of polyurethane foams with a density lower than 21 kg/m³, prepared in the presence of CO₂ alone as an expanding agent, which partially overcomes the above-mentioned drawbacks.

According to this Patent, in fact, the use in combination with normal polyurethane reagents, basically composed of a conventional polyol polyether and an organic polyisocyanate, of an additive including a cross-linking agent having a low equivalent weight and, optionally, a cell-opening agent, reduces the scorching but at the same time causes the deterioration of physical and mechanical properties such as the load bearing capacity, imprinting, etc.

The Applicant has now found that also this kind of draw-back can be eliminated by using a prepolymer with an isocyanic functionality instead of the organic polyisocyanate.

The present invention consequently relates to flexible polyurethane foams having a density which is lower than 21 kg/m³ obtained, in the presence of an expanding agent which is not of the chlorofluoroalkanic type, by the reaction between at least one prepolymer having an isocyanic functionality and a polyolic composition including:
a) at least one polyol with an equivalent weight of between 500 and 1500 and a nominal functionality of at least 2;
b) water in a quantity of between 3 and 18 parts each 100 parts of polyol (a);
c) an additive for processability including:
   1) at least one cross-linking/chain-lengthening agent having at least two reactive groups with an isocyanic functionality and an equivalent weight lower than 200; and, optionally,
   2) at least one cell-opening agent selected from mono-ols and/or polyols based on polyethylenoxide having an equivalent weight of between 200 and 5000 and an ethylene oxide content higher than 50% by weight.

According to the present invention the expanding agent is preferably composed only of carbon dioxide whereas the ratio of equivalent weights between the isocyanic prepolymer and the polyolic composition is between 0.6 and 0.95.

The isocyanic prepolymer has a content of free NCO groups of between 10 and 45% by weight, preferably between 15 and 40%, and can be prepared by prepolymerizing an organic polyisocyanate, having an isocyanic functionality of at least 2, with at least one polyol polyether having an average molecular weight of between 500 and 8000, preferably between 1000 and 6000, having a hydroxylic functionality of between 2 and 4. This polyol can be obtained, in turn, by the condensation of C₂-C₆ olefinic oxides on a starter having at least two active hydrogen atoms selected from those described below.

In particular polyol polyethers can be used which have been obtained by starting from ethylene oxide, propylene oxide or their mixtures.

Any organic polyisocyanate capable of producing polyurethane foams can be used in the preparation of the isocyanic prepolymers of the present invention, even if aromatic, cycloaliphatic polyisocyanates and the corresponding alkyl substituted derivatives are preferred.

In particular it is possible to use di-isocyanates having a low molecular weight with the general formula:

OCN-R-NCO (I)

where R represents a cycloaliphatic, aromatic radical, possibly alkyl substituted, having from 5 to 25 carbon atoms such as meta and/or para-phenylenediisocyanate; 2,4-toluendiisocyanate alone or mixed with the isomer 2,6-toluendiisocyanate; 4,4'-diphenylmethanediisocyanate, possibly mixed with its isomer 2,4'; 4,4'-dicyclohexylmethanediisocyanate; 1-isocyanate-3-isocyanatemethyl-3,3,5-trimethylcyclohexane (isophorondiisocyanate); etc.

Alternatively polyisocyanates can be used having a medium or high molecular weight with varying degrees of condensation obtained by the phosgenation of aniline-formaldehyde condensates. These products are composed of mixtures of polymethylenepolyphenylpolyisocyanates having the general formula: 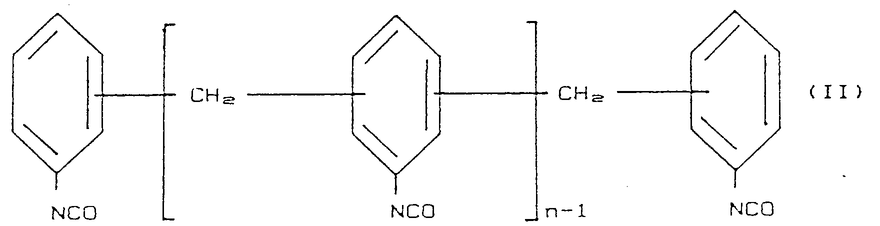
wherein n represents an integer higher than or equal to 1.

Preferred polyisocyanates with a medium or high molecular weight are mixtures of polymethylenepolyphenylenepolyisocyanates having an average functionality of 2.6-2.8. These products are commercially produced with various names such as "Tedimon 31" of ECP-Enichem Polimeri, "Suprasec DNR" of ICI or "Desmodur 44 V20" of Bayer.

The preferred polyisocyanate of the present invention is 2,4-toluenediisocyanate alone or mixed with at least 20% by weight of 2.6 isomer.

Undistilled or crude toluenediisocyanate, i.e. a partially purified toluenediisocyanate extracted from any plate of the distillation column may be normally used.

Polyol (a) has an equivalent weight of between 500 and 1500 and a nominal functionality of at least 2, preferably between 2 and 4. This reagent may be selected from polyol polyethers, polyol polyethers containing ester groups, polyol polyethers containing chain-end aminic groups, polyol polyesters, etc.

Preferred products are polyol polyethers, possibly containing ester or chain-end aminic groups, obtained by the condensation of propylene oxide possibly in the presence of ethylene oxide in a quantity lower than 75% by weight, preferably from 20 to 50%.

The condensation takes place on starters having at least two active hydrogen atoms, such as glycols, triols, tetrols, etc., amines, alkanolamines and polyamines or their mixtures.

Representative examples of polyol polyethers (a) which can be used in the present invention are those terminated with propylene oxide or ethylene oxide and wherein the starter is a glycol such as dipropylenglycol; a triol such as glycerine; trimethylolpropane; 1,2,4-trihydroxybutane; 1,2,6-trihydroxyhexane; 1,1,1-trimethylolethane; a tetrol such as pentaerythrol; or a polyfunctional hydroxyalkane such as xylitol; arabitol; sorbitol; mannitol, etc.

These polyols can be used as such or may contain either in dispersion or partially grafted to the polyolic chains, solid particles, preferably polymeric, with dimensions lower than 20 microns. Polymers which are suitable for this purpose are: polyacrylonitrile; polystyrene; polyvinylchloride; etc or their mixtures or their copolymers; or polymers based on urea such as "Polyharnstoff dispersionen" or "PHD polyolen" of Bayer. These additives can be prepared by polymerization in situ in the polyol or can be prepared aside and subsequently added to the polyol.

Both polyols (a) and the polyol polyethers used in the preparation of the isocyanic prepolymers can be obtained with procedures known to experts in the field and described, for example, in "Saunders & Frisch - Polyurethanes, Chemistry and Technology" Interscience, New York, 1964.

In the production of the polyurethane foams of the present invention the quantity of water which can be used in the polyolic composition has a critical function in that the development of carbon dioxide which causes the expansion process of the polyurethane resin occurs with the water. Quantities of water ranging from 3 to 18 parts by weight, preferably from 5 to 15 parts, with respect to 100 parts of polyol (a) are normally used.

Consequently, the expanding agent of the polyurethane resin used in the present invention is preferably carbon dioxide developed in situ by the chemical reaction between water and free NCO groups of the modified polyisocyanate. This method of introducing the expanding gas into the polymerization mass is not limiting in that other gases and other techniques can be used, for example by bubbling air; CO₂; nitrogen; etc into the reaction mass by external injection, which are also included in the present invention.

The cross-linking/chain lengthening agent is used in quantities which are sufficient to prevent the splitting of the foam. These quantities generally range from 1 to 20 parts by weight per 100 parts of polyol (a). The cross-linking/chain-lengthening agent is selected from the following products:
diethanolamine; triethanolamine; diisopropanolamine; ethylenglycol; glycerine; trimethylolpropane; sorbitol; erythritol; sucrose; butandiol; isomers of phenylendiamine; pentaerythrol; 2,4,6-triaminotoluol; isophorondiamine; diethyltoluendiamine; ethanolamine; hydrazine; abducts of ethylene oxide on: polyfunctional amines, aminoalcohols, alkoxylated amines or their mixtures; etc.

The cell-opening agent, used in quantities of between 0 and 20 parts by weight per 100 parts of polyol (a), is composed of mono-ols and/or polyols with a functionality of between 2 and 6 based on polyethylenoxide wherein the content of ethylene oxide is between 50 and 100% by weight.

The flexible polyurethane foams of the present invention can be obtained with a two step procedure including:
i) reacting a polyisocyanate having general formula (I) or (II) with at least one polyol polyether having a molecular weight of between 500 and 8000, preferably between 1000 and 6000, having a hydroxylic functionality of between 2 and 4 to obtain an isocyanate prepolymer with a content of free NCO groups of between 10 and 45% by weight, preferably between 15 and 40%.
ii) reacting the prepolymer thus obtained with a polyolic composition including:
   a) at least one polyol having an equivalent weight of between 500 and 1500 and a nominal functionality of at least 2;
   b) water in quantities of between 3 and 18 parts per 100 parts of polyol (a);
   c) an additive for the processability including:
      1) at least one cross-linking/chain-lengthening agent having at least two reactive groups with an isocyanic functionality and an equivalent weight lower than 200; and, optionally,
      2) at least one cell-opening agent selected from mono-ols and/or polyols based on polyethylenoxide having an equivalent weight of between 200 and 5000 and a content of ethylene oxide higher than 50% by weight;
and wherein agents other than chlorofluoroalkanes are used as expanding agents.

The reaction of stage (i) is generally carried out between 50 and 90°C, without a catalyst, whereas stage (ii) is carried out at room temperature in the presence of aminic catalysts, such as triethylendiamine, and/or metallic catalysts such as tin octoate (ous), and other additives such as cell-regulators, thermo-oxidation stabilizers, dyes, etc. Details on the polymerization of polyurethanes are described in "Saunders & Frisch - Polyurethanes, Chemistry and Technology" indicated previously.

The flexible polyurethane foams of the present invention have a density of between 15 and 21 kg/m³ and a load bearing capacity, according to regulation ISO 2439 at 40% compression, higher than 50 N, generally between 50 and 150 N, they do not present scorching and have satisfactory mechanical properties, such as compression set, flexural strength and resilience and consequently, on the one hand, have the characteristics necessary to meet the requirements of furniture, furnishing, transport and car industries, etc which require foams with these properties, and on the other hand do not involve the use of chlorofluoroalkanic expanding agents which are harmful to the environment.

The following examples provide a better illustration of the present invention but do not limit it in any way.

The quantities of the various components and formulations are expressed as parts by weight unless otherwise specified.

### EXAMPLE 1

Two isocyanic prepolymers were prepared, both having a content of free NCO groups of 27%, using the following procedure.

58.3 parts of toluendiisocyanate (TDI) having a ratio of 2.4 and 2.6 isomers of 80/20, were reacted with 41.7 parts of a trifunctional polyol polyether having a molecular weight of 3500, obtained by the polymerization on glycerine of ethylene oxide and propylene oxide in a ratio EO/PO of 10/90, at a temperature of about 75°C.

Similarly, 57.3 parts of TDI were reacted with 42.7 parts of a trifunctional polyol having a molecular weight of 6000 and a ratio EO/PO of 20/80.

90 parts of a 70/30 mixture of the two prepolymers described above were reacted in a 50x50x50 cm box with:
- 67.5 parts of a trifunctional polyol polyether (glycerine starter) with an EO/PO ratio of 50/50 and molecular weight of 4000;
- 6 parts of water;
- 3.5 parts of a mixture composed of 2 parts of water and 1.5 parts of diisopropanolamine.

The mixture, stirred for several seconds, was reacted at room temperature in the presence of a siliconic surface-active agent and catalysts triethylendiamine and tin octoate (ous).

A flexible expanded foam (A) was obtained whose characteristics are shown in the Table.

### EXAMPLE 2

90 parts of a 70/30 mixture of the two prepolymers of Example 1 were reacted at room temperature under the same conditions as Example 1, with:
- 67.5 parts of a trifunctional polyol polyether having a molecular weight of 3500 and EO/PO ratio of 10/90;
- 6 parts of water;
- 3.5 parts of a mixture composed of 2 parts of water and 1.5 parts of diethanolamine.

A flexible expanded foam (B) was obtained, whose characteristics are shown in the Table.

### EXAMPLE 3

90 parts of a 70/30 mixture of the two prepolymers of Example 1 were reacted at room temperature and under the same conditions as Example 1, with:
- 67.5 parts of a trifunctional polyol polyether having a molecular weight of 4000 and EO/PO ratio of 25/75 containing 20% by weight of a dispersed phase composed of polyacrylonitrile;
- 6 parts of water;
- 3.5 parts of a mixture composed of 2 parts of water and 1.5 parts of polyglycolamine having a molecular weight of 163, terminated with a primary aminic group and a primary hydroxylic group.

A flexible expanded foam (C) was obtained, whose characteristics are shown in the Table.

### EXAMPLE 4

90 parts of a 70/30 mixture of the two prepolymers of Example 1 were reacted at room temperature and under the same conditions as Example 1, with:
- 67.5 parts of a trifunctional polyol polyether having a molecular weight of 4000 and EO/PO ratio of 50/50;
- 7.5 parts of water;
- 5.0 parts of the mixture of Example 1.

A flexible expanded foam (D) was obtained, whose characteristics are shown in the Table.

### EXAMPLE 5

90 parts of a 70/30 mixture of the two prepolymers of Example 1 were reacted at room temperature and under the same conditions as Example 1, with:
- 67.5 parts of a trifunctional polyol polyether having a molecular weight of 3500 and EO/PO ratio of 10/90;
- 7.5 parts of water;
- 5.0 parts of the mixture of Example 2.

A flexible expanded foam (E) was obtained, whose characteristics are shown in the Table.

### EXAMPLE 6

90 parts of a 70/30 mixture of the two prepolymers of Example 1 were reacted at room temperature and under the same conditions as Example 1, with:
- 67.5 parts of a trifunctional polyol polyether having a molecular weight of 4000 and EO/PO ratio of 10/90 and containing 20% by weight of a dispersed phase based on an acrylonitrile/styrene copolymer;
- 7.5 parts of water;
- 5.0 parts of the mixture of Example 3.

A flexible expanded foam (F) was obtained, whose characteristics are shown in the Table.

### EXAMPLE 7 (Comparative)

58 parts of 80/20 TDI were reacted, at room temperature, with:
- 100 parts of a trifunctional polyol polyether having a molecular weight of 4000 and EO/PO ratio of 10/90;
- 6 parts of water;
- 3.5 parts of the mixture of Example 3;
and in the presence of a siliconic surface-active agent and catalysts triethylendiamine and tin octoate (ous).

The reaction mixture was stirred for a few seconds giving a flexible expanded foam (G) whose characteristics are shown in the Table.

### EXAMPLE 8 (Comparative)

65 parts of 80/20 TDI were reacted, at room temperature, with:
- 100 parts of a trifunctional polyol polyether having a molecular weight of 4000 and EO/PO ratio of 10/90;
- 7.5 parts of water;
and in the presence of a siliconic surface-active agent and catalysts triethylendiamine and tin octoate (ous).

The reaction mixture was stirred for a few seconds giving a flexible expanded foam (G) whose characteristics are shown in the Table.

**TABLE**

| Exp. foam | A | B | C | D | E | F | G | H |
|---|---|---|---|---|---|---|---|---|
| Property | | | | | | | | |
| Density kg/m³ | 18 | 18 | 18 | 16 | 16 | 16 | 18 | 16 |
| Permanent deformation (90%) | 7 | 6 | 5 | 10 | 8 | 6 | 15 | 16 |
| Load bearing capac.40% (N) | 72 | 96 | 120 | 46 | 68 | 98 | 74 | 52 |
| Imprinting | NO | NO | NO | NO | NO | NO | YES | YES |
| Splitting | NO | NO | NO | NO | NO | NO | NO | YES |
| Scorching | NO | NO | NO | NO | NO | NO | YES | YES |

## Claims

1. Flexible polyurethane foams with a density lower than 21 kg/m³ obtained, in the presence of an expanding agent which is not chlorofluoroalkanic, from the reaction between at least one prepolymer having an isocyanic functionality and one polyolic composition including:
a) at least one polyol with an equivalent weight of between 500 and 1500 and a nominal functionality of at least 2;
b) water in a quantity of between 3 and 18 parts per 100 parts of polyol (a);
c) an additive for processability including:
1) at least one cross-linking/chain-lengthening agent having at least two reactive groups with an isocyanic functionality and an equivalent weight lower than 200; and, optionally,
2) at least one cell-opening agent selected from mono-ols and/or polyols based on polyethylenoxide having an equivalent weight of between 200 and 5000 and an ethylene oxide content higher than 50% by weight.

2. Polyurethane foams according to Claim 1, wherein the expanding agent is composed of carbon dioxide alone.

3. Polyurethane foams according to Claims 1 or 2, wherein the ratio in equivalents between the isocyanic prepolymer and polyolic composition is between 0.6 and 0.95.

4. Polyurethane foams according to any of the previous Claims, wherein the isocyanic prepolymer has a content of free NCO groups of between 10 and 45% by weight and is prepared by pre-polymerizing an organic polyisocyanate, having an isocyanic functionality of at least 2, with at least one polyol polyether having an average molecular weight of between 500 and 8000 having a hydroxylic functionality of between 2 and 4.

5. Polyurethane foams according to Claim 4, wherein the polyol is obtained by the condensation of C₂-C₆ olefinic oxides on a starter having at least two active hydrogen atoms.

6. Polyurethane foams according to Claims 4 or 5, wherein the polyol polyethers are obtained by starting from ethylene oxide, propylene oxide or their mixtures.

7. Polyurethane foams according to Claims 4, 5 or 6, wherein the organic polyisocyanate is selected from diisocyanates having a low molecular weight and with the general formula:
OCN-R-NCO (I)
wherein R represents a cycloaliphatic, aromatic radical, possibly alkyl substituted, having from 5 to 25 carbon atoms.

8. Polyurethane foams according to Claims 4, 5, or 6, wherein the organic polyisocyanate is selected from products having a medium or high molecular weight with varying degrees of condensation obtained by the phosgenation of aniline-formaldehyde condensates. These products are composed of mixtures of polymethylenpolyphenyl-polyisocyanates having the general formula: 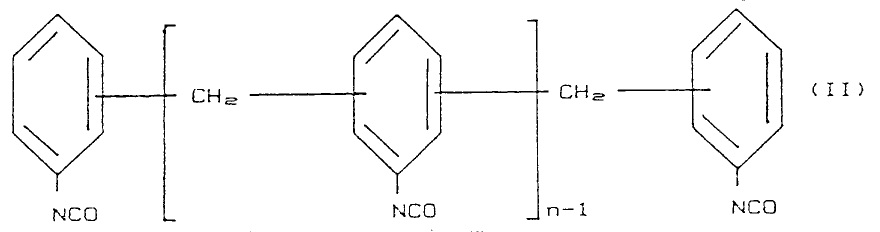 wherein n represents an integer higher than or equal to 1.

9. Polyurethane foams according to any of the Claims from 4 to 8, wherein the organic polyisocyanate is 2,4-toluendiisocyanate alone or mixed with at least 20% by weight of 2.6 isomer.

10. Polyurethane foams according to any of the previous Claims, wherein polyol (a) has an equivalent weight of between 500 and 1500 and a nominal functionality of between 2 and 4.

11. Polyurethane foams according to Claim 10, wherein polyol (a) is selected from polyol polyethers, polyol polyethers containing ester groups, polyol polyethers containing chain-end aminic groups, polyol polyesters.

12. Polyurethane foams according to Claims 10 or 11, wherein the polyols are polyol polyethers, possibly containing ester groups or chain-end aminic groups, obtained by the condensation of propylene oxide possibly in the presence of ethylene oxide in quantities lower than 75% by weight, preferably between 20 and 50%.

13. Polyurethane foams according to any of the previous Claims, wherein the expanding agent is carbon dioxide produced in situ.

14. Polyurethane foams according to any of the previous Claims, wherein the cross-linking/chain-lengthening agent is used in quantities which are sufficient to prevent the splitting of the foam.

15. Polyurethane foams according to any of the previous Claims, wherein the cross-linking/chain-lengthening agent is selected from: diethanolamine; triethanolamine; diisopropanolamine; ethylenglycol; glycerine; trimethylolpropane; sorbitol; erythritol; sucrose; butandiol; isomers of phenylendiamine; pentaerythrol; 2,4,6-triaminotoluene; isophorondiamine; diethyltoluendiamine; ethanolamine; hydrazine; abducts of ethylene oxide on: polyfunctional amines, aminoalcohols, alkoxylated amines or their mixtures.

16. Polyurethane foams according to any of the previous Claims, wherein the cell-opening agent is used in quantities ranging from 0 to 20 parts by weight per 100 parts of polyol (a) and is composed of mono-ols and/or polyols having a functionality of between 2 and 6 based on polyethylenoxide wherein the content of ethylene oxide is between 50 and 100% by weight.

17. Polyurethane foams according to any of the previous Claims, having a density of between 15 and 21 kg/m³ and a load bearing capacity, according to regulation ISO 2439 at 40% compression, higher than 50 N, generally between 50 and 150 N.

18. Procedure for the preparation of the polyurethane foams claimed in any of the previous points, including:
i) reacting a polyisocyanate having general formula (I) or (II) with at least one polyol polyether having a molecular weight of between 500 and 8000, preferably between 1000 and 6000, having a hydroxylic functionality of between 2 and 4 to obtain an isocyanate prepolymer with a content of free NCO groups of between 10 and 45% by weight, preferably between 15 and 40%.
ii) reacting the prepolymer thus obtained with a polyolic composition including:
a) at least one polyol having an equivalent weight of between 500 and 1500 and a nominal functionality of at least 2;
b) water in quantities of between 3 and 18 parts per 100 parts of polyol (a);
c) an additive for the processability including:
1) at least one cross-linking/chain-lengthening agent having at least two reactive groups with an isocyanic functionality and an equivalent weight lower than 200; and, optionally,
2) at least one cell-opening agent selected from mono-ols and/or polyols based on polyethylenoxide having an equivalent weight of between 200 and 5000 and a content of ethylene oxide higher than 50% by weight;
and wherein agents other than chlorofluoroalkanes are used as expanding agents.

19. Process according to Claims 18 or 19, wherein the expanding agent is carbon dioxide produced in situ.

20. Process according to Claims 18 or 19, wherein the reaction of step (i) is carried out at a temperature ranging from 50 to 90°C, without a catalyst, whereas step (ii) is carried out at room temperature and in the presence of aminic and/or metallic catalysts, cell-regulators, thermo-oxidation stabilizers, dyes.

21. Use of the polyurethane foams claimed in any of the previous points in the furniture, home-furnishing, transport, car industries.
